# EUROPÄISCHE PATENTSCHRIFT

(11) **EP 2 907 393 B1**
(45) Veröffentlichungstag und Bekanntmachung des Hinweises auf die Patenterteilung: **25.07.2018**
(21) Anmeldenummer: 14155481.6
(22) Anmeldetag: 17.02.2014
(51) Int. Cl.: A23C 9/12, A23C 9/142, A23C 21/02

(54) **Lactosefreie Milchprodukte**
Milk products free of lactose
Produits du lait dénué du lactose

(43) Veröffentlichungstag der Anmeldung: 19.08.2015
(73) Patentinhaber: DMK Deutsches Milchkontor GmbH, 27404 Zeven (DE)
(72) Erfinder: Döring, Sven-Rainer, 27404 Zeven (DE)
(74) Vertreter: Fabry, Bernd

(56) Entgegenhaltungen:
- EP-B1- 1 503 630
- WO-A1-2009/043882
- DE-U1- 9 411 450
- US-A1- 2010 055 286
- US-A1- 2011 206 806
- US-A1- 2013 142 904
- US-B1- 6 623 954

## Beschreibung

### GEBIET DER ERFINDUNG

Die Erfindung befindet sich auf dem Gebiet der Milchindustrie und betrifft ein neues Verfahren zur Herstellung von lactosefreien Produkten.

### STAND DER TECHNIK

Neugeborene Säugetiere bilden während ihrer Stillzeit das Enzym Laktase, welches das Disaccharid Milchzucker in die vom Stoffwechsel verwertbaren Zuckerarten D-Galaktose und D-Glukose spaltet. Im Laufe der natürlichen Entwöhnung von der Muttermilch sinkt die Aktivität der Laktase auf etwa 5-10% der Aktivität bei der Geburt. Das gilt für den Menschen und alle anderen Säugetiere. Nur bei Populationen, die seit langer Zeit Milchwirtschaft betreiben, hat sich eine Mutation durchgesetzt, die dazu führt, dass auch noch im Erwachsenenalter genügend Lactase produziert wird (Laktasepersistenz). Vermutlich liegt das daran, dass die höhere Lactaseaktivität einen Selektionsvorteil (Mineralstoffe, Nährwert) für diese Gruppen bot.

Bei mangelhafter Lactaseaktivität gelangt ungespaltener Milchzucker beim Menschen bis in den Dickdarm, wo er von Darmbakterien aufgenommen und vergoren wird. Als Gärungsprodukte entstehen Milchsäure sowie Methan und Wasserstoff. Die Gase führen unter anderem zu Blähungen, die osmotisch aktive Milchsäure zu einem Wassereinstrom in den Darm (osmotischer Diarrhoe).

In Asien und Afrika betrifft die fehlende Lactasepersistenz bzw. Lactoseintoleranz den größten Teil der erwachsenen Bevölkerung (90 % oder mehr), in Westeuropa, Australien und Nordamerika sind es 5-15 % (bei hellhäutigen Menschen). In Deutschland leiden nach Schätzungen 15-25 % der Gesamtbevölkerung an einer Milchzuckerunverträglichkeit. Der Grund für eine Lactoseintoleranz ist ein angeborener Enzymmangel, bei dem die entsprechenden Enzyme fehlen, die den Milchzucker in seine Einzelteile aufspalten und abbauen. In den letzten Jahren ist zumindest das Bewusstsein für einen Zusammenhang der genannten Symptome mit der Anwesenheit von Lactose insbesondere in Milchprodukten stark gewachsen. Dies hat dazu geführt, dass es ein großes Bedürfnis nach lactosearmen oder besser noch lactosefreien Produkten gibt.

Aus dem Stand der Technik sind unterschiedlichste Verfahren bekannt, mit deren Hilfe man Lactose aus Milchprodukten entweder abtrennt und als Nebenprodukt weiterverarbeitet oder durch Zugabe entsprechende Enzyme abbaut.

Sie wird beispielsweise in der EP 0208706 A1 (VALIO) die Abtrennung von Lactose aus Magermilch durch Ultrafiltration beschrieben.

Gegenstand der EP 226035 A1 (VALIO) ist ein Verfahren, bei dem die Lactose mit Hilfe von Kationenaustauschern chromatographisch aus der Milch entfernt wird.

In der WO 2008 000895 A1 (VALIO) wird vorgeschlagen, Milch mit Lactase zu behandeln und dabei teilweise zu hydrolysieren, anschließend das Enzym durch Temperaturbehandlung zu inaktivieren und schließlich nicht umgesetzte Lactose durch ansäuern zu zerstören.

Ein weiteres Verfahren ist aus der EP 1503630 B1 (VALIO) bekannt: Dabei wird Milch einer Ultrafiltration unterworfen, das gewonnene Permeat nanofiltriert, das daraus erhaltene Permeat durch Umkehrosmose aufkonzentriert und dann mit Lactase behandelt. Nach einer ausreichenden Verweilzeit wird das lactosearme Produkt mit dem Retentat vereinigt und weiterverarbeitet. Die WO 2009/043882 A1 offenbart ein Verfahren zur Herstellung von lactosefreien Milchprodukten, bei dem man Magermilch einer Ultrafiltration unterwirft, das lactosehaltige Ultrafiltrations-Permeat einer Nanofiltration unterwirft, das lactosefreie Permeat der Nanofiltration in die Ultrafiltration zurückführt, und wobei vor oder nach den Filtrationsschritten ein Produkt des Verfahrens in einen Enzymreaktor geleitet wird, in dem ihm zum enzymatischen Abbau der enthaltenen Lactose Lactase zugesetzt wird.

Ein gemeinsames Problem bei den Verfahren des Stands der Technik besteht jedoch in den langen Standzeiten, die erforderlich sind, um einen möglichst vollständigen Abbau der Lactose sicherzustellen, sowie dem Umstand, dass die Enzyme im Produkt verbleiben.

Die Aufgabe der vorliegenden Erfindung hat somit darin bestanden, ein Verfahren zur Herstellung lactosefreier Milchprodukte zur Verfügung zu stellen, das die geschilderten Nachteile des Stands der Technik zuverlässig überwindet und es insbesondere erlaubt, lactosefreie Milchprodukte in deutlich verkürzter Reaktionszeit zur Verfügung zu stellen, die zudem auch keine Enzyme mehr enthalten.

### BESCHREIBUNG DER ERFINDUNG

Gegenstand der Erfindung ist ein Verfahren zur Herstellung von lactosefreien Milchprodukten, bei dem man
(a) Magermilch einer Ultrafiltration oder einer Kombination aus Dia- und Ultrafiltration unterwirft,
(b) das lactosefreie Retentat R1 in einen Vorratsbehälter und das lactosehaltige Permeat P1 in einen Enzymreaktor leitet,
(c) dem Permeat P1 eine zum enzymatischen Abbau der darin enthaltenen Lactose ausreichende Menge Lactase zusetzt,
(d) die so erhaltene Reaktionsmischung einer Nanofiltration unterwirft,
(e) das lactosefreie Permeat P2 in den Vorratsbehälter fördert und mit dem lactosefreien Retentat R1 vermischt und
(f) das Retentat R2, welches noch nicht umgesetzte Lactose und Enzym enthält wieder in den Enzymreaktor zurückführt.

Überraschenderweise wurde gefunden, dass mit Hilfe der beschriebenen Maßnahmen, speziell der Rückführung nichtumgesetzter Lactose und Enzym, der Durchsatz an Milch zur Herstellung der lactosefreien Produkte signifikant erhöht wird. Die Verfahrensweise ist so beschaffen, dass nicht nur ein diskontinuierlicher, sondern insbesondere auch ein kontinuierlicher Betrieb möglich ist. Die Produkte sind lactosefrei bzw. im Wesentlichen lactosefrei, d.h. der Anteil an Lactose liegt unter 0,1 Gew.-%. Darüber hinaus finden sich keine Enzyme oder Enzymabbauprodukte in den Endprodukten. Dies bedeutet auf der anderen Seite auch wieder, dass kein aktives Enzym verloren geht. Im Enzymreaktor muss nur die Menge an Enzym ersetzt werden, die tatsächlich inaktiviert wird. Es liegt auf der Hand, dass durch diese Maßnahmen die Rentabilität des Verfahrens erheblich gesteigert wird.

### FILTRATIONSVERFAHREN

Der erste Verfahrensschritt besteht darin, die Magermilch einer Ultrafiltration bzw. einer Kombination aus Dia- und Ultrafiltration zu unterwerfen und in ein Permeat P1 und ein Retentat R1 aufzutrennen. Das Permeat P1 enthält die Lactose und wird in einem Enzymreaktor mit Lactase behandelt. Die Reaktionsmischung wird dabei im Kreis über eine Nanofiltrationseinrichtung geführt, bei der das lactosefreie Permeat P2 ausgeschleust und das noch nicht umgesetzte Lactose sowie Lactase enthaltende Retentat R2 in den Reaktor zurückgeführt wird. Kernelement des erfindungsgemäßen Verfahrens sind damit Filtrationsschritte mit Membranen unterschiedlicher Trennschärfe.

Ultra- und Nanofiltration sind Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch "*Cut-off*") bei 100 nm oder darüber, spricht man von Mikrofiltration. Liegt die Ausschlussgrenze in dem Bereich zwischen 2-100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 40 bar liegt.

Die Ausschlussgrenzen von Ultrafiltrationsmembranenen werden auch in Form des *NMWC* (englisch: Nominal Molecular Weight Cut-Off, auch *MWCO,* Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

Für die Ultrafiltration haben sich Membranen als besonders geeignet erwiesen, die einen Porendurchmesser im Bereich von etwa 1.000 bis etwa 50.000 und vorzugsweise etwa 5.000 bis etwa 25.000 Dalton besitzen. Die Nanofiltration bevorzugt Porendurchmesser im Bereich von 100 bis 5.000 und vorzugsweise etwa 500 bis 2.000 Dalton.

Der Werkstoff der Filterfläche - sowohl bei der Ultra- als auch der Nanofiltration - kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Sowohl Ultra- als auch Nanofiltration können im Sinne der vorliegenden Erfindung "heiß" oder "kalt", d.h. im Temperaturbereich von etwa 4 bis etwa 55 °C durchgeführt werden. Bevorzugt ist es jedoch, bei Temperaturen im niedrigen Bereich von etwa 5 bis etwa 20 °C (Ultrafiltration) bzw. 20 bis 30 °C (Nanofiltration) zu arbeiten.

### HYDROLYSE

Die Ultrafiltration dient dazu einen lactosehaltigen und einen lactosefreien Produktstrom zu erzeugen. Erster wird nun einer Hydrolyse zugeführt, letzterer in einem Tank zwischengelagert.

Lactose gehört zur Gruppe der Disaccharide und besteht aus den beiden Molekülen D-Galactose und D-Glucose, die über eine β-1,4-glycosidische Bindung verbunden sind.

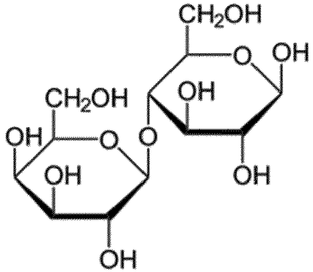

Zum Abbau in die beiden Zuckerkomponenten wird Lactose mit dem Enzym Lactase (auch als LPH oder *LCT* bezeichnet) versetzt. Die Hydrolyse erfolgt vorzugsweise in einem Rührbehälter mit kontinuierlichem Zulauf und Ablauf sowie einer Dosiervorrichtung zur Zugabe des Enzyms und einem am Boden des Reaktors befindlichen Ventil zum Ablassen desaktivierten Enzyms, das im Laufe der Zeit sedimentiert. Es hat sich als vorteilhaft erwiesen, eine wirksame Enzymkonzentration von etwa 180.000 bis 250.000 FCC-Einheiten Lactase pro kg zu hydrolysierender Lactose einzusetzen und die Reaktion bei Temperaturen im Bereich von etwa 23 bis etwa 27 °C sowie einem leicht sauren pH-Wert von etwa 5 bis 6 durchzuführen.

Wie oben beschrieben ist der Reaktor mit einer NF-Einheit verbunden, so dass die gesamte Reaktionsmischung ständig über die Membran im Kreis geführt wird. Über die Permeatseite wird lactosefreie Lösung abgegeben, die dann in den Vorratsbehälter geleitet und mit dem Retentat aus der UF-Einheit vermischt wird, während das Retentat in den Reaktor zurückgeführt wird. Enzym geht auf diese Weise nicht verloren, lediglich muss verbrauchter Katalysator entweder kontinuierlich oder batchweise zugeführt werden, um eine möglichst gleichmäßige Enzymkonzentration zu gewährleisten. Inaktives Enzym sinkt im Laufe des Prozesses zu Boden und kann dann bei kurzer Unterbrechung des Verfahrens durch ein Bodenventil abgelassen werden.

### GEWERBLICHE ANWENDBARKEIT

Eine Vorrichtung zur Herstellung von lactosefreien Milchprodukten umfassend:
(a) eine Ultrafiltrationseinheit **UF,**
(b) einen Vorrats- und Mischbehälter **M,**
(c) einen Rührreaktor **R,** und
(d) eine Nanofiltrationseinheit **NF,**
wobei
(i) die Retentatseite der UF-Einheit mit dem Vorrats- und Mischbehälter und die Permeatseite mit dem Rührreaktor
(ii) der Rührreaktor mit der NF-Einheit, und
(iii) die Permeatseite der NF-Einheit mit dem Vorrats- und Mischbehälter und die Retentatseite als Schlaufe wieder mit dem Rührreaktor verbunden ist, wird ebenfalls offenbart.

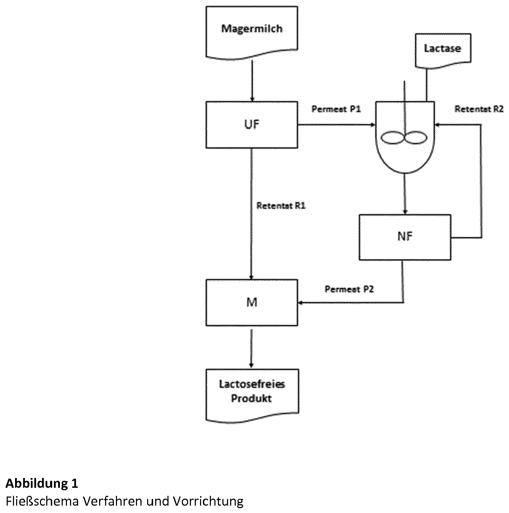

Verfahren und Vorrichtung werden nachfolgend durch die **Abbildung 1** näher erläutert. Die Bezugszeichen entsprechen den oben verwendeten.

### BEISPIELE

### Beispiel 1

Magermilch wurde auf 15 °C gekühlt und kontinuierlich mit einer Geschwindigkeit von 100 l/h über eine UF-Pilotanlage ausgestattet mit einer Spiralwickelmembran (Trenngrenze 20.000 Dalton) gegeben. Das dabei erhaltene Retentat R1 wurde in einen Sammelmischbehälter gefahren, das lactosehaltige Permeat P1 hingegen in einen kontinuierlich betriebenen Rührreaktor mit einem Fassungsvermögen von 100 l gepumpt und dort mit einer solchen Menge Lactase versetzt, dass eine Konzentration von etwa 200.000 FCC Einheiten/kg Lactose erreicht wurde. Die Mischung wurde auf pH=6 eingestellt und bei 25 °C über eine NF-Pilotanlage (Keramikmembran, Trenngrenze 1.000 Dalton) im Kreis gefahren. Dabei wurde das lactosefreie Permeat P1 in den Mischungsbehälter geleitet und mit dem Retentat R1 vermischt. Das nicht umgesetzte Lactose sowie Enzym enthaltende Retentat R2 wurde wieder in den Enzymreaktor zurückgeführt. Das sich im Sammelbehälter befindende Endprodukt wies eine Lactosekonzentration von weniger als 0.1 Gew.-% auf und war frei von Enzymen und Enzymabbauprodukten.

### Beispiel 2

Magermilch wurde mit einer Temperatur von 30°C kontinuierlich mit einer Geschwindigkeit von 120 l/h über eine UF-Pilotanlage ausgestattet mit einer Spiralwickelmembran (Trenngrenze 15.000 Dalton) gegeben. Das dabei erhaltene Retentat R1 wurde in einen Sammelmischbehälter gefahren, das lactosehaltige Permeat P1 hingegen in einen kontinuierlich betriebenen Rührreaktor mit einem Fassungsvermögen von 100 l gepumpt und dort mit einer solchen Menge Lactase versetzt, dass eine Konzentration von etwa 200.000 FCC Einheiten/kg Lactose erreicht wurde. Die Mischung wurde auf pH=6 eingestellt und bei 25 °C über eine NF-Pilotanlage (Keramikmembran, Trenngrenze 500 Dalton) im Kreis gefahren. Dabei wurde das lactosefreie Permeat P1 in den Mischungsbehälter geleitet und mit dem Retentat R1 vermischt. Das nicht umgesetzte Lactose sowie Enzym enthaltende Retentat R2 wurde wieder in den Enzymreaktor zurückgeführt. Das sich im Sammelbehälter befindende Endprodukt wies eine Lactosekonzentration von weniger als 0.1 Gew.-% auf und war frei von Enzymen und Enzymabbauprodukten.

## Patentansprüche

1. Verfahren zur Herstellung von lactosefreien Milchprodukten, bei dem man
(a) Magermilch einer Ultrafiltration oder einer Kombination aus Dia- und Ultrafiltration unterwirft,
(b) das lactosefreie Retentat R1 in einen Vorratsbehälter und das lactosehaltige Permeat P1 in einen Enzymreaktor leitet,
(c) dem Permeat P1 eine zum enzymatischen Abbau der darin enthaltenen Lactose ausreichende Menge Lactase zusetzt,
(d) die so erhaltene Reaktionsmischung einer Nanofiltration unterwirft,
(e) das lactosefreie Permeat P2 in den Vorratsbehälter fördert und mit dem lactosefreien Retentat R1 vermischt und
(f) das Retentat R2, welches noch nicht umgesetzte Lactose und Enzym enthält wieder in den Enzymreaktor zurückführt.

2. Verfahren nach Anspruch 1, **dadurch gekennzeichnet, dass** man es entweder kontinuierlich oder diskontinuierlich durchführt.

3. Verfahren nach den Ansprüchen 1 und/oder 2, **dadurch gekennzeichnet, dass** man die Ultrafiltration der Magermilch mittels einer Membran aus Edelstahl, Polymerwerkstoffen, Keramik, Aluminiumoxid oder textilen Geweben einsetzt.

4. Verfahren nach mindestens einem der Ansprüche 1 bis 3, **dadurch gekennzeichnet, dass** man die Ultrafiltration der Magermilch mit Membranen durchführt, die einen Porendurchmesser von 1.000 bis 50.000 Dalton aufweisen.

5. Verfahren nach mindestens einem der Ansprüche 1 bis 4, **dadurch gekennzeichnet, dass** man die Ultrafiltration der Magermilch bei Temperaturen im Bereich von 4 bis 55°C durchführt.

6. Verfahren nach mindestens einem der Ansprüche 1 bis 5, **dadurch gekennzeichnet, dass** man die enzymatische Abbau der in Permeat P1 enthaltenen Lactose bei einer Enzymkonzentration von 180.000 bis 250.000 FCC-Einheiten Lactase pro kg umzusetzender Lactose durchführt.

7. Verfahren nach mindestens einem der Ansprüche 1 bis 6, **dadurch gekennzeichnet, dass** man den enzymatischen Abbau der in Permeat P1 enthaltenen Lactose bei einer Temperatur im Bereich von 23 bis 27 °C durchführt.

8. Verfahren nach mindestens einem der Ansprüche 1 bis 7, **dadurch gekennzeichnet, dass** man den enzymatischen Abbau der in Permeat P1 enthaltenen Lactose bei einem pH-Wert im Bereich von 6 bis 7 durchführt.

9. Verfahren nach mindestens einem der Ansprüche 1 bis 8, **dadurch gekennzeichnet, dass** man die Nanofiltration des Hydrolyseproduktes mittels einer Membran aus Edelstahl, Polymerwerkstoffen, Keramik, Aluminiumoxid oder textilen Geweben einsetzt.

10. Verfahren nach mindestens einem der Ansprüche 1 bis 9, **dadurch gekennzeichnet, dass** man die Nanofiltration des Hydrolyseproduktes mit Membranen durchführt, die einen Porendurchmesser von 100 bis 2.000 Dalton aufweisen.

11. Verfahren nach mindestens einem der Ansprüche 1 bis 10, **dadurch gekennzeichnet, dass** man die Nanofiltration des Hydrolyseproduktes bei Temperaturen im Bereich von 4 bis 55°C durchführt.

## Claims

1. Process for producing lactose-free milk products, wherein
(a) skimmed milk is subjected to an ultrafiltration or to a combination of dia- and ultrafiltration,
(b) the lactose-free retentate R1 is fed to a storage container and the lactose-containing permeate P1 is fed to an enzyme reactor,
(c) an amount of lactase sufficient for the enzymatic degradation of the lactose present therein is added to the permeate P1,
(d) the reaction mixture obtained in this way is subjected to a nanofiltration,
(e) the lactose-free permeate P2 is conveyed to the storage container and mixed with the lactose-free retentate R1, and
(f) the retentate R2, which still comprises unreacted lactose and enzyme, is returned again to the enzyme reactor.

2. Process according to claim 1, carried out either continuously or discontinuously.

3. Process according to claims 1 and / or 2, wherein the ultrafiltration of the skimmed milk is performed by a membrane made of stainless steel, polymeric materials, ceramic, aluminium oxide or fabrics.

4. Process according to at least one of claims 1 to 3, wherein the ultrafiltration of the skimmed milk is carried out with membranes which have a pore diameter of 1000 to 50 000 daltons.

5. Process according to at least one of claims 1 to 4, wherein the ultrafiltration of the skimmed milk is carried out at temperatures in the range from 4 to 55 °C.

6. Process according to at least one of claims 1 to 5, wherein the enzymatic degradation of lactose contained in permeate P1 is carried out at an enzyme concentration of from 180 000 to 250 000 FCC units of lactase per kg of lactose to be reacted.

7. Process according to at least one of claims 1 to 6, wherein the enzymatic degradation of lactose contained in permeate P1 is carried out at a temperature in the range from 23 to 27 °C.

8. Process according to at least one of claims 1 to 7, wherein the enzymatic degradation of lactose contained in permeate P1 is carried out at a pH in the range from 6 to 7.

9. Process according to at least one of claims 1 to 8, wherein the nanofiltration of the hydrolysis product is performed by a membrane made of stainless steel, polymer materials, ceramic, aluminum oxide or fabrics.

10. Process according to at least one of claims 1 to 9, wherein the nanofiltration of the hydrolysis product is carried out with membranes which have a pore diameter of from 100 to 2000 daltons.

11. Process according to at least one of claims 1 to 10, wherein the nanofiltration of the hydrolysis product is carried out at temperatures in the range from 4 to 55 °C.

## Revendications

1. Procédé de fabrication de produits laitiers sans lactose, selon lequel
(a) du lait écrémé est soumis à une ultrafiltration ou à une combinaison d'une dia-et d'une ultrafiltration,
(b) le rétentat sans lactose R1 est acheminé dans un contenant de stockage et le perméat contenant du lactose P1 dans un réacteur enzymatique,
(c) une quantité de lactase suffisante pour la décomposition enzymatique du lactose qu'il contient est ajoutée au perméat P1,
(d) le mélange réactionnel ainsi obtenu est soumis à une nanofiltration,
(e) le perméat sans lactose P2 est transporté dans le contenant de stockage et mélangé avec le rétentat sans lactose R1, et
(f) le rétentat R2, qui contient du lactose encore non réagi et l'enzyme, est réintroduit dans le réacteur enzymatique.

2. Procédé selon la revendication 1, **caractérisé en ce qu'**il est réalisé de manière continue ou discontinue.

3. Procédé selon les revendications 1 et/ou 2, **caractérisé en ce que** l'ultrafiltration du lait écrémé est réalisée au moyen d'une membrane en acier inoxydable, en matériaux polymères, en céramique, en oxyde d'aluminium ou en tissus textiles.

4. Procédé selon au moins l'une quelconque des revendications 1 à 3, **caractérisé en ce que** l'ultrafiltration du lait écrémé est réalisée avec des membranes qui présentent un diamètre de pores de 1000 à 50 000 Dalton.

5. Procédé selon au moins l'une quelconque des revendications 1 à 4, **caractérisé en ce que** l'ultrafiltration du lait écrémé est réalisée à des températures dans la plage allant de 4 à 55 °C.

6. Procédé selon au moins l'une quelconque des revendications 1 à 5, **caractérisé en ce que** la décomposition enzymatique du lactose contenu dans le perméat P1 est réalisée à une concentration en enzyme de 180 000 à 250 000 unités FCC de lactase par kg de lactose à transformer.

7. Procédé selon au moins l'une quelconque des revendications 1 à 6, **caractérisé en ce que** la décomposition enzymatique du lactose contenu dans le perméat P1 est réalisée à une température dans la plage allant de 23 à 27 °C.

8. Procédé selon au moins l'une quelconque des revendications 1 à 7, **caractérisé en ce que** la décomposition enzymatique du lactose contenu dans le perméat P1 est réalisée à un pH dans la plage allant de 6 à 7.

9. Procédé selon au moins l'une quelconque des revendications 1 à 8, **caractérisé en ce que** la nanofiltration du produit d'hydrolyse est réalisée au moyen d'une membrane en acier inoxydable, en matériaux polymères, en céramique, en oxyde d'aluminium ou en tissus textiles.

10. Procédé selon au moins l'une quelconque des revendications 1 à 9, **caractérisé en ce que** la nanofiltration du produit d'hydrolyse est réalisée avec des membranes qui présentent un diamètre de pores de 100 à 2 000 Dalton.

11. Procédé selon au moins l'une quelconque des revendications 1 à 10, **caractérisé en ce que** la nanofiltration du produit d'hydrolyse est réalisée à des températures dans la plage allant de 4 à 55 °C.
